# EUROPÄISCHE PATENTSCHRIFT

(11) **EP 4 112 287 B1**
(45) Veröffentlichungstag und Bekanntmachung des Hinweises auf die Patenterteilung: **13.08.2025**
(21) Anmeldenummer: 21214589.0
(22) Anmeldetag: 15.12.2021
(51) Int. Cl.: B29D 30/24, B29D 30/26, B29D 30/20

(54) **REIFENAUFBAUMASCHINE UND VERFAHREN ZUM BETREIBEN EINER REIFENAUFBAUMASCHINE**
TYRE ASSEMBLY MACHINE AND METHOD OF OPERATING A TYRE ASSEMBLY MACHINE
MACHINE DE FABRICATION DE PNEUS ET PROCÉDÉ D'UTILISATION D'UNE MACHINE DE FABRICATION DE PNEUS

(30) Priorität: 28.06.2021 DE 102021206646
(43) Veröffentlichungstag der Anmeldung: 04.01.2023
(73) Patentinhaber: Continental Reifen Deutschland GmbH, 30175 Hannover (DE)
(72) Erfinder: Linne, Stefan, 30165 Hannover (DE)
(74) Vertreter: Continental Corporation

(56) Entgegenhaltungen:
- WO-A1-2013/093818
- WO-A1-2016/097905
- CN-B- 109 501 345
- DE-A1- 102008 037 535
- JP-A- 2001 232 693
- JP-U- S 544 283

## Beschreibung

Die Erfindung betrifft eine Reifenaufbaumaschine für die Verwendung in der ersten Aufbaustufe eines zweistufigen Reifenaufbauprozesses, mit einer Aufnahmewelle zur Aufnahme einer Reifenaufbautrommel, einer ersten Reifenaufbautrommel, welche dazu eingerichtet ist, bei der Herstellung einer Reifenkarkasse gemäß einem ersten Aufbauverfahren verwendet zu werden, und einer zweiten Reifenaufbautrommel, welche dazu eingerichtet ist, bei der Herstellung einer Reifenkarkasse gemäß einem zweiten Aufbauverfahren verwendet zu werden. Darüber hinaus betrifft die Erfindung ein Verfahren zum Betreiben einer Reifenaufbaumaschine, mit den Schritten: Herstellen einer Reifenkarkasse gemäß einem ersten Aufbauverfahren unter Verwendung einer ersten Reifenaufbautrommel der Reifenaufbaumaschine und Demontieren der ersten Reifenaufbautrommel von einer Aufnahmewelle der Reifenaufbaumaschine.

Im Bereich der zweistufigen Reifenaufbautechnik wird in einer ersten Aufbaustufe üblicherweise zunächst eine Reifenkarkasse hergestellt. Die Reifenkarkasse umfasst typischerweise eine Innenschicht, beispielsweise aus einem luftdichten Gummi, eine über der Innenschicht angeordnete Einlage und Seitenwände. Die Einlage kann beispielsweise eine Zugträger oder Zugfäden aufweisende Gummischicht sein.

Nachdem die Reifenkarkasse in der ersten Aufbaustufe hergestellt wurde, kann dann unter Verwendung einer anderen Reifenaufbaumaschine das Gürtelpaket des Reifens aufgebracht werden.

In der ersten Aufbaustufe des zweistufigen Reifenaufbauprozesses haben sich insbesondere zwei Herstellungsverfahren durchgesetzt, nämlich das Schulterverfahren (SUB) und das Flachtrommelverfahren (SOT). Zur Herstellung einer Reifenkarkasse gemäß einem dieser Aufbauverfahren ist es jedoch bisher erforderlich, eine verfahrensspezifische Reifenaufbaumaschine zu verwenden.

Reifenhersteller, die sowohl im Schulterverfahren als auch im Flachtrommelverfahren Reifenkarkassen herstellen möchten, benötigen also bisher zwei separate Reifenaufbaumaschinen.

Die WO2013093818A1 offenbart ein Verfahren und eine Anlage zum Bauen von Reifen für Fahrzeugräder, wobei in einer Betriebsposition einer Karkassenstruktur-Baulinie eine Formtrommel mit einem Paar von Stützelementen verbunden ist, das ein erstes Stützelement und ein zweites Stützelement umfasst, wobei die Formtrommel, verbunden mit dem Paar von Stützelementen, in einer Ablagelinie bewegt wird, die in der Karkassenstruktur-Baulinie enthalten ist und die Formtrommel von der Ablagelinie zu einer nachfolgenden Arbeitsstation der Karkassenstruktur-Baulinie überführt wird.

Ferner offenbart die WO2016097905A1 eine Anlage und ein Verfahren zum Aufbau von Reifenkarkassenstrukturen, wobei die Anlage eine Karkassenstruktur-Aufbaulinie umfasst, die mit einer Vielzahl von Stationen versehen ist, darunter eine Entladestation und Aufbaustationen.

Die DE102008037535A1 offenbart eine Vorrichtung zum Aufbau einer Reifenkarkasse für einen Fahrzeugreifen mit einer Vorrichtung, mit welcher die Kernzentrier-Vorrichtungen variabel im Durchmesser expandierbar sind und die gleichzeitig für die Herstellung von kleinen Reifendimensionen genutzt werden können und gleichzeitig der Durchmesser der Balgträger motorisch verfahren werden kann. Die der Erfindung zugrundeliegende Aufgabe besteht somit darin, die Einsatzmöglichkeiten einer Reifenaufbaumaschine zu erweitern.

Die Aufgabe wird gelöst durch eine Reifenaufbaumaschine der eingangs genannten Art, wobei die erste Reifenaufbautrommel und die zweite Reifenaufbautrommel der erfindungsgemäßen Reifenaufbaumaschine einzeln und ohne die jeweils andere Reifenaufbautrommel an der Aufnahmewelle montierbar sind, sodass die Reifenaufbaumaschine zur Herstellung einer Reifenkarkasse gemäß dem ersten Aufbauverfahren und zur Herstellung einer Reifenkarkasse gemäß dem zweiten Aufbauverfahren einsetzbar ist.

Durch die Auswechselbarkeit der Reifenaufbautrommeln können mittels der erfindungsgemäßen Reifenaufbaumaschine Reifenkarkassen mit unterschiedlichen Aufbauverfahren hergestellt werden. Es kann erforderlich sein, dass zusätzlich zu dem Wechsel der Reifenaufbautrommel der Reifenaufbaumaschine weitere Bestandteile, wie beispielsweise Balgträger, der Reifenaufbaumaschine montiert oder demontiert werden müssen, damit die Herstellung der Reifenkarkasse in einem anderen Aufbauverfahren mittels der Reifenaufbaumaschine umgesetzt werden kann.

In einer bevorzugten Ausführungsform der erfindungsgemäßen Reifenaufbaumaschine ist die erste Reifenaufbautrommel als Expansionstrommel ausgebildet, welche Balgträger umfasst und dazu eingerichtet ist, bei der Herstellung einer Reifenkarkasse gemäß dem Schulterverfahren verwendet zu werden. Das Schulterverfahren kann in diesem Fall auch als Expansionstrommelverfahren bezeichnet werden. In diesem Verfahren wird auf den Außenumfang der Expansionstrommel zunächst die Innenseele und anschließend die Karkasseinlage aufgelegt und gespleißt. Nach dem Spleißen wird die Expansionstrommel expandiert, sodass es zu einer Vergrößerung des Trommeldurchmessers kommt. Bei expandierter Trommel werden dann die Wulstkerne mitsamt Kernprofilen gesetzt. Es folgt der Umschlag der die Expansionstrommel überragenden Überstände der Karkasseinlage um die Wulstkerne und die Kernprofile, was mit Hilfe von aufblähbaren Bälgen durchgeführt wird. Nach dem Auflegen von ggf. weiteren Reifenbauteilen und dem Auflegen und Anrollen von Seitenwandprofilen ist die Reifenkarkasse dann fertiggestellt und wird von der Expansionstrommel entfernt.

Die der Erfindung zugrundeliegende Reifenaufbaumaschine wird ferner dadurch vorteilhaft weitergebildet, dass die erste Reifenaufbautrommel als Klapptrommel ausgebildet und dazu eingerichtet ist, unter Verwendung von auf der Aufnahmewelle und einer Verschiebewelle montierten Balgträgern bei der Herstellung einer Reifenkarkasse gemäß dem Schulterverfahren verwendet zu werden. In diesem Fall kann das Schulterverfahren auch als Klapptrommelverfahren bezeichnet werden. Die aufblähbaren Bälge sind in diesem Fall nicht Bestandteil der Trommel, sondern sind trommelextern auf der Aufnahmewelle und der Verschiebewelle der Reifenaufbaumaschine angeordnet.

Es ist außerdem eine erfindungsgemäße Reifenaufbaumaschine vorteilhaft, bei welcher die zweite Reifenaufbautrommel als Flachtrommel mit einem veränderbaren Außenumfang ausgebildet und dazu eingerichtet ist, bei der Herstellung einer Reifenkarkasse gemäß dem Flachtrommelverfahren verwendet zu werden. Beim Flachtrommelverfahren können entweder zuerst die Seitenwände und danach die Innenschicht oder alternativ ein kombiniertes Bauteil aus Seitenwänden und Innenschicht auf die Reifenaufbautrommel aufgelegt werden. Danach folgen die Einlagen, wobei ein oder zwei Einlagen aufgelegt werden können. Nach dem Auflegen der Einlage bzw. der Einlagen werden zwei Kerne zentrisch über der Reifenaufbautrommel positioniert. Die Reifenaufbautrommel expandiert dann in die Kerne, sodass die Einlage mit den Kernen verklebt. Danach wird das Gebilde aus Karkasslagen und Kernen auf den Bombierkopf übertragen.

Es ist darüber hinaus eine erfindungsgemäße Reifenaufbaumaschine bevorzugt, welche eine Verschiebewelle aufweist. Die Verschiebewelle verläuft vorzugsweise koaxial zu der Aufnahmewelle und umfasst eine Wellenkupplung zum Kuppeln der Verschiebewelle mit der Aufnahmewelle. Die Verschiebewelle ist zum Wechsel der Reifenaufbautrommeln und zum Entnehmen der fertigen Karkasse axial zu der Aufnahmewelle verfahrbar. Somit kann der Abstand zwischen der Verschiebewelle und der Aufnahmewelle durch axiales Verfahren der Verschiebewelle vergrößert werden, um durch den so geschaffenen Freiraum die demontierte Reifenaufbautrommel zu entnehmen und die zu montierende Reifenaufbautrommel einzusetzen. Nach dem Wechsel der Reifenaufbautrommeln kann der Abstand von Verschiebewelle und Aufnahmewelle dann wieder verringert werden. Beispielsweise können die Verschiebewelle und die Aufnahmewelle in diesem Fall über die Wellenkupplung miteinander in Eingriff gebracht werden.

In einer weiteren erfindungsgemäßen Ausführungsform weist die Flachtrommel einen Verstellmechanismus auf, mit welchem der Außenumfang der Flachtrommel einstellbar ist, wobei der Verstellmechanismus über eine Axialbewegung der Verschiebewelle betätigbar ist. Um den Durchmesser der Flachtrommel zu verstellen, wird die Verschiebewelle axial gegen den Verstellmechanismus der Flachtrommel gefahren. Über konisch geformte Trommelsegmente, welche von der Verschiebewelle axial bewegt werden, kann eine Durchmesserveränderung erreicht werden. Die Verschiebewelle kann mit einem Verschiebekasten verbunden sein, welcher einen Verschiebekastenantrieb aufweist. Über eine Axialbewegung der Verschiebewelle können somit während des Herstellungsvorgangs unterschiedliche Durchmesser, beispielsweise der Wickeldurchmesser und der Kernklemmdurchmesser, eingestellt werden. Das Kernsetzen muss in diesem Fall durch eine externe Kernsetz- und Karkasstragevorrichtung erfolgen.

Die der Erfindung zugrundeliegende Aufgabe wird ferner durch ein Verfahren der eingangs genannten Art gelöst, wobei im Rahmen des erfindungsgemäßen Verfahrens eine zweite Reifenaufbautrommel auf der Aufnahmewelle der Reifenaufbaumaschine montiert wird und eine Reifenkarkasse gemäß einem zweiten Aufbauverfahren unter Verwendung der zweiten Reifenaufbautrommel der Reifenaufbaumaschine hergestellt wird. Das erfindungsgemäße Verfahren wird vorzugsweise zum Betreiben einer Reifenaufbaumaschine nach einer der vorstehend beschriebenen Ausführungsformen eingesetzt. Hinsichtlich der Vorteile und Modifikationen des erfindungsgemäßen Verfahrens wird somit zunächst auf die Vorteile und Modifikationen der erfindungsgemäßen Reifenaufbaumaschine verwiesen.

In einer bevorzugten Ausführungsform des erfindungsgemäßen Verfahrens erfolgt das Herstellen der Reifenkarkasse unter Verwendung der ersten Reifenaufbautrommel im Schulterverfahren. Wenn eine Expansionstrommel verwendet wird, kann das Schulterverfahren auch als Expansionstrommelverfahren bezeichnet werden. Wenn eine Klapptrommel verwendet wird, kann das Schulterverfahren auch als Klapptrommelverfahren bezeichnet werden. Wenn die ersten Reifenaufbautrommel als Expansionstrommel ausgebildet ist, umfasst diese vorzugsweise Balgträger mit aufblähbaren Bälgen. Wenn die erste Reifenaufbautrommel als Klapptrommel ausgebildet ist, sind Balgträger mit aufblähbaren Bälgen auf der Aufnahmewelle und der Verschiebewelle erforderlich.

Das erfindungsgemäße Verfahren wird ferner dadurch vorteilhaft weitergebildet, dass das Herstellen der Reifenkarkasse unter Verwendung der zweiten Reifenaufbautrommel im Flachtrommelverfahren erfolgt.

In einer weiteren bevorzugten Ausführungsform des erfindungsgemäßen Verfahrens erfolgt ein axiales Verfahren einer Verschiebewelle der Reifenaufbaumaschine zum Wechseln der Reifenaufbautrommeln, wobei die Verschiebewelle koaxial zu der Aufnahmewelle verläuft und eine Wellenkupplung zum Kuppeln der Verschiebewelle mit der Aufnahmewelle aufweist. Alternativ oder zusätzlich erfolgt ein Betätigen eines Verstellmechanismus der als Flachtrommel ausgebildeten zweiten Reifenaufbautrommel über eine Axialbewegung der Verschiebewelle, wobei durch das Betätigen des Verstellmechanismus der Außenumfang der Flachtrommel einstellbar ist.

Nachfolgend werden bevorzugte Ausführungsformen der Erfindung unter Bezugnahme auf die beiliegenden Zeichnungen näher erläutert und beschrieben. Dabei zeigen:
- Fig. 1: eine schematische Darstellung der erfindungsgemäßen Reifenaufbaumaschine mit einer ersten Reifenaufbautrommel zum Herstellen einer Reifenkarkasse gemäß einem ersten Aufbauverfahren; und
- Fig. 2: die in der Fig. 1 abgebildete Reifenaufbaumaschine mit einer zweiten Reifenaufbautrommel zum Herstellen einer Reifenkarkasse gemäß einem zweiten Aufbauverfahren.

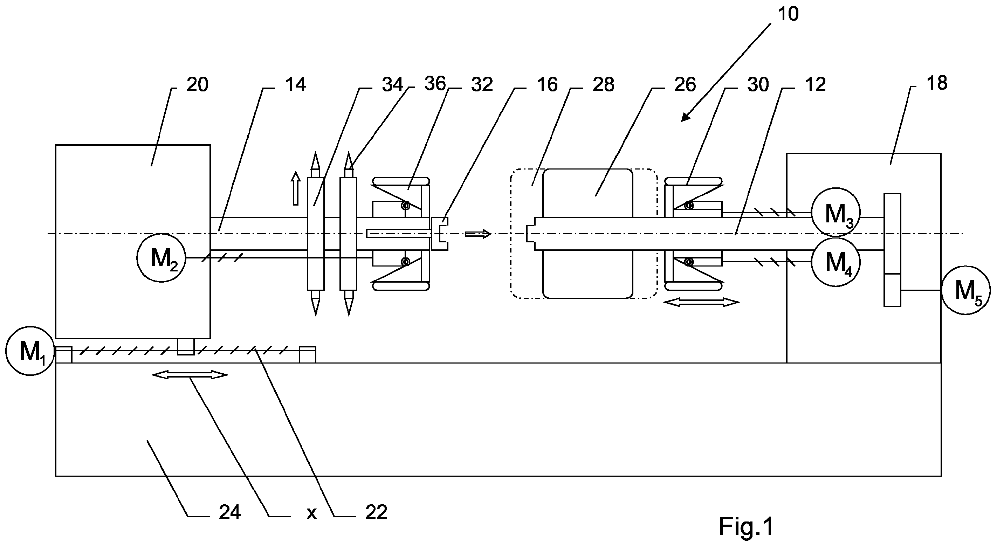

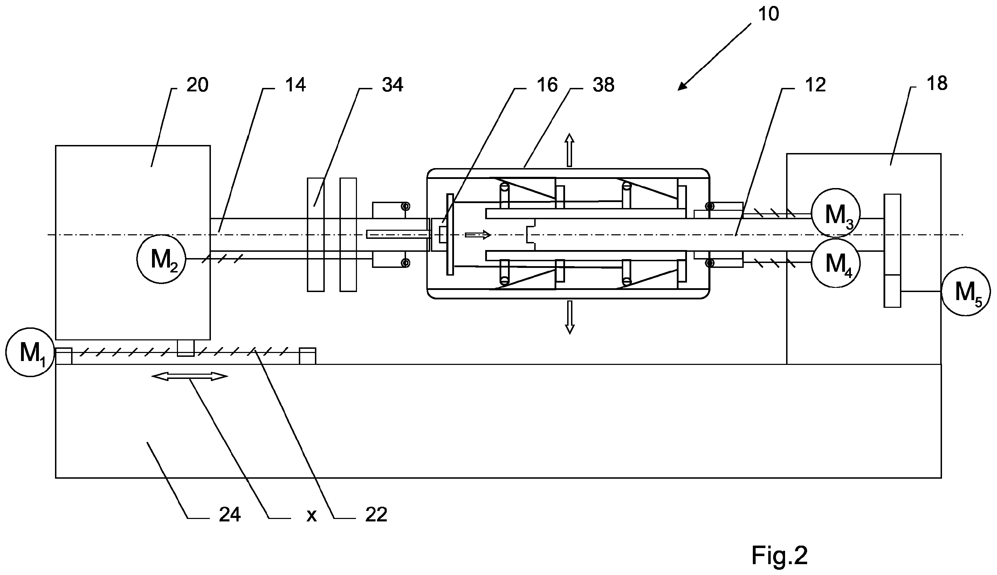

Die Fig. 1 und 2 zeigen eine Reifenaufbaumaschine 10, welche in der ersten Aufbaustufe eines zweistufigen Reifenaufbauprozesses Verwendung finden kann. Mittels der Reifenaufbaumaschine 10 lässt sich eine Reifenkarkasse in zwei unterschiedlichen Aufbauverfahren herstellen. Die Reifenaufbaumaschine 10 ist sowohl zum Herstellen einer Reifenkarkasse im Schulterverfahren als auch zur Herstellung einer Reifenkarkasse im Flachtrommelverfahren geeignet.

In der Fig. 1 ist die Reifenaufbaumaschine 10 in einer Konfiguration abgebildet, in welcher eine Reifenkarkasse im Schulterverfahren herstellbar ist.

Die Reifenaufbaumaschine 10 weist eine Aufnahmewelle 12 auf, auf welcher eine als Expansionstrommel oder Klapptrommel ausgebildete Reifenaufbautrommel 26 montiert ist. Ferner ist über die Bezugsziffer 28 angedeutet, dass für das Schulterverfahren geeignete Reifenaufbautrommeln auch eine andere Breite, hier eine größere Breite, aufweisen können.

Die Reifenaufbaumaschine 10 weist ferner eine koaxial zu der Aufnahmewelle 12 angeordnete Verschiebewelle 14 auf. Die Verschiebewelle 14 weist an dem der Aufnahmewelle 12 zugewandten Stirnseite eine Wellenkupplung 16 auf. Mittels der Wellenkupplung 16 können die Aufnahmewelle 12 und die Verschiebewelle 14 miteinander in Eingriff gebracht werden. Die Verschiebewelle 14 ist zum Wechsel der Reifenaufbautrommeln 26, 28, 38 axial zu der Aufnahmewelle 12 verfahrbar.

Das von der Verschiebewelle 14 abgewandte Ende der Aufnahmewelle 12 erstreckt sich in einen Spindelkasten 18 hinein, welcher auf einer Maschinenbasis 24 montiert ist. In oder an dem Spindelkasten 18 befindet sich ein Antrieb M₅, mit welchem die Aufnahmewelle 12 und somit auch die an der Aufnahmewelle 12 montierte Reifenaufbautrommel 26, 28 in Rotation versetzt werden kann.

Zum Verschieben der Verschiebewelle 14 ist diese mit einem axial beweglichen Verschiebekasten 20 verbunden. Der Verschiebekasten 20 kann über eine Spindel 22 in Axialrichtung x bewegt werden. Zur Veranlassung einer Axialbewegung des Spindelkastens 18 samt Verschiebewelle 14 ist an der Spindel 22 ein Antrieb M₁ angeordnet.

Zum Herstellen der Reifenkarkasse im Schulterverfahren sind aufblähbare Bälge erforderlich, welche von den Balgträgern 30, 32 getragen werden. Der Balgträger 30 ist auf der Aufnahmewelle 12 montiert und kann über den Antrieb M₃ in Axialrichtung verfahren werden. Mittels des Antriebs M₄ kann eine Durchmesserverstellung des Balgträgers 30 umgesetzt werden. Der Balgträger 32 ist auf der Verschiebewelle 14 montiert. Mittels des Antriebs M₂ kann der Durchmesser des Balgträgers 32 verändert werden.

Die Reifenaufbautrommel 26 (bzw. die Reifenaufbautrommel 28) sind dazu eingerichtet, bei der Herstellung einer Reifenkarkasse gemäß dem Schulterverfahren verwendet zu werden. Zur Herstellung der Reifenkarkasse im Schulterverfahren sind neben den Balgträgern 30, 32 auch Kernzentriervorrichtungen 34 erforderlich, welche zum zentrierten Setzen der Kerne 36 dienen.

Die Fig. 2 zeigt die Reifenaufbaumaschine 10 in einer Konfiguration, welche zur Herstellung von Reifenkarkassen im Flachtrommelverfahren geeignet ist. Ausgehend von dem in der Fig. 1 dargestellten Maschinenzustand ist zur Herbeiführung dieser Konfiguration lediglich eine Demontage der Reifenaufbautrommel 26 (bzw. der Reifenaufbautrommel 28) und der Balgträger 30, 32 erforderlich. Nach erfolgter Demontage ist die Reifenaufbautrommel 38 auf der Aufnahmewelle 12 zu montieren. Die Reifenaufbautrommel 38 ist dazu eingerichtet, bei der Herstellung einer Reifenkarkasse im Flachtrommelverfahren verwendet zu werden. Die als Flachtrommel ausgebildete Reifenaufbautrommel 38 weist einen Verstellmechanismus auf, mit welchem der Außenumfang der Flachtrommel einstellbar ist. Der Verstellmechanismus der Reifenaufbautrommel 38 ist über eine Axialbewegung der Verschiebewelle 14 betätigbar. Somit kann der Antrieb M₁ zur Durchmesserverstellung an der Reifenaufbautrommel 38 genutzt werden. Um den Durchmesser der Flachtrommel zu verstellen, wird die Verschiebewelle 14 mittels des Antriebs M₁ axial gegen den Verstellmechanismus der Flachtrommel gefahren. Über konisch geformte Trommelsegmente, welche von der Verschiebewelle 14 axial bewegt werden, wird eine Durchmesserveränderung erreicht. Über eine Axialbewegung der Verschiebewelle 14 können somit während des Herstellungsvorgangs unterschiedliche Durchmesser, beispielsweise der Wickeldurchmesser und der Kernklemmdurchmesser, eingestellt werden. Das Kernsetzen muss in diesem Fall durch eine externe Kernsetz- und Karkasstragevorrichtung erfolgen.

Die Antriebe M₁-M₅ können beispielsweise elektromotorische Antriebe sein. Alternativ können die Antriebe M₁-M₅ auch pneumatische oder hydraulische Antriebe sein.

### Bezugszeichenliste

- 10: Reifenaufbaumaschine
- 12: Aufnahmewelle
- 14: Verschiebewelle
- 16: Wellenkupplung
- 18: Spindelkasten
- 20: Verschiebekasten
- 22: Spindel
- 24: Maschinenbasis
- 26: Reifenaufbautrommel
- 28: Reifenaufbautrommel
- 30: Balgträger
- 32: Balgträger
- 34: Kernzentriervorrichtung
- 36: Kerne
- 38: Reifenaufbautrommel

- M₁-M₅: Antriebe
- x: Bewegungsrichtung

## Patentansprüche

1. Reifenaufbaumaschine (10) für die Verwendung in der ersten Aufbaustufe eines zweistufigen Reifenaufbauprozesses, mit
- einer Aufnahmewelle (12) zur Aufnahme einer Reifenaufbautrommel (26, 28, 38),
- einer ersten Reifenaufbautrommel (26, 28), welche dazu eingerichtet ist, bei der Herstellung einer Reifenkarkasse gemäß einem ersten Aufbauverfahren verwendet zu werden, wobei das Herstellen der Reifenkarkasse unter Verwendung der ersten Reifenaufbautrommel (26, 28) im Schulterverfahren erfolgt; und
- einer zweiten Reifenaufbautrommel (38), welche dazu eingerichtet ist, bei der Herstellung einer Reifenkarkasse gemäß einem zweiten Aufbauverfahren verwendet zu werden, wobei das Herstellen der Reifenkarkasse unter Verwendung der zweiten Reifenaufbautrommel (38) im Flachtrommelverfahren erfolgt;
**dadurch gekennzeichnet, dass** die erste Reifenaufbautrommel (26, 28) und die zweite Reifenaufbautrommel (38) einzeln und ohne die jeweils andere Reifenaufbautrommel (26, 28, 38) an der Aufnahmewelle (12) montierbar sind, sodass die Reifenaufbaumaschine (10) zur Herstellung einer Reifenkarkasse gemäß dem ersten Aufbauverfahren und zur Herstellung einer Reifenkarkasse gemäß dem zweiten Aufbauverfahren einsetzbar ist.

2. Reifenaufbaumaschine (10) nach Anspruch 1,
**dadurch gekennzeichnet, dass** die erste Reifenaufbautrommel (26, 28) als Expansionstrommel ausgebildet, welche Balgträger umfasst und dazu eingerichtet ist, bei der Herstellung einer Reifenkarkasse gemäß dem Schulterverfahren verwendet zu werden.

3. Reifenaufbaumaschine (10) nach Anspruch 1,
**dadurch gekennzeichnet, dass** die erste Reifenaufbautrommel (26, 28) als Klapptrommel ausgebildet und dazu eingerichtet ist, unter Verwendung von auf der Aufnahmewelle (12) und einer Verschiebewelle (14) montierten Balgträgern (30, 32) bei der Herstellung einer Reifenkarkasse gemäß dem Schulterverfahren verwendet zu werden.

4. Reifenaufbaumaschine (10) nach einem der vorstehenden Ansprüche,
**dadurch gekennzeichnet, dass** die zweite Reifenaufbautrommel (38) als Flachtrommel mit einem veränderbaren Außenumfang ausgebildet und dazu eingerichtet ist, bei der Herstellung einer Reifenkarkasse gemäß dem Flachtrommelverfahren verwendet zu werden.

5. Reifenaufbaumaschine (10) nach einem der vorstehenden Ansprüche,
**gekennzeichnet durch** Verschiebewelle (14), welche koaxial zu der Aufnahmewelle (12) verläuft und eine Wellenkupplung (16) zum Kuppeln der Verschiebewelle (14) mit der Aufnahmewelle (12) aufweist, wobei die Verschiebewelle (14) zum Wechsel der Reifenaufbautrommeln (26, 28, 38) axial zu der Aufnahmewelle (12) verfahrbar ist.

6. Reifenaufbaumaschine (10) nach Anspruch 5,
**dadurch gekennzeichnet, dass** die Flachtrommel einen Verstellmechanismus aufweist, mit welchem der Außenumfang der Flachtrommel einstellbar ist, wobei der Verstellmechanismus über eine Axialbewegung der Verschiebewelle (14) betätigbar ist.

7. Verfahren zum Betreiben einer Reifenaufbaumaschine (10), insbesondere einer Reifenaufbaumaschine (10) nach einem der vorstehenden Ansprüche, mit den Schritten:
- Herstellen einer Reifenkarkasse gemäß einem ersten Aufbauverfahren unter Verwendung einer ersten Reifenaufbautrommel (26, 28) der Reifenaufbaumaschine (10), wobei das Herstellen der Reifenkarkasse unter Verwendung der ersten Reifenaufbautrommel (26, 28) im Schulterverfahren erfolgt; und
- Demontieren der ersten Reifenaufbautrommel (26, 28) von einer Aufnahmewelle (12) der Reifenaufbaumaschine (10);
**gekennzeichnet durch** die Schritte:
- Montieren einer zweiten Reifenaufbautrommel (38) auf der Aufnahmewelle (12) der Reifenaufbaumaschine (10); und
- Herstellen einer Reifenkarkasse gemäß einem zweiten Aufbauverfahren unter Verwendung der zweiten Reifenaufbautrommel (38) der Reifenaufbaumaschine (10), wobei das Herstellen der Reifenkarkasse unter Verwendung der zweiten Reifenaufbautrommel (38) im Flachtrommelverfahren erfolgt.

8. Verfahren nach Anspruch 7,
**gekennzeichnet durch** zumindest einen der folgenden Schritte:
- axiales Verfahren einer Verschiebewelle (14) der Reifenaufbaumaschine (10) zum Wechsel der Reifenaufbautrommeln (26, 28, 38), wobei die Verschiebewelle (14) koaxial zu der Aufnahmewelle (12) verläuft und eine Wellenkupplung (16) zum Kuppeln der Verschiebewelle (14) mit der Aufnahmewelle (12) aufweist,
- Betätigen eines Verstellmechanismus der als Flachtrommel ausgebildeten zweiten Reifenaufbautrommel (38) über eine Axialbewegung der Verschiebewelle (14), wobei durch das Betätigen des Verstellmechanismus der Außenumfang der Flachtrommel einstellbar ist.

## Claims

1. Tyre-building machine (10) for use in the first building stage of a two-stage tyre-building process, having
- a receiving shaft (12) for receiving a tyre-building drum (26, 28, 38),
- a first tyre-building drum (26, 28) which is configured to be used in the production of a tyre carcass according to a first building method, wherein the production of the tyre carcass using the first tyre-building drum (26, 28) is realized in the shoulder method, and
- a second tyre-building drum (38) which is configured to be used in the production of a tyre carcass according to a second building method, wherein the production of the tyre carcass using the second tyre-building drum (38) is realized in the flat-drum method;
**characterized in that** the first tyre-building drum (26, 28) and the second tyre-building drum (38) are mountable on the receiving shaft (12) individually and without the in each case other tyre-building drum (26, 28, 38), so that the tyre-building machine (10) is able to be used for producing a tyre carcass according to the first building method and for producing a tyre carcass according to the second building method.

2. Tyre-building machine (10) according to Claim 1,
**characterized in that** the first tyre-building drum (26, 28) is in the form of an expansion drum which comprises bellows carriers and which is configured to be used in the production of a tyre carcass according to the shoulder method.

3. Tyre-building machine (10) according to Claim 1,
**characterized in that** the first tyre-building drum (26, 28) is in the form of a collapsible drum and is configured to be used in the production of a tyre carcass according to the shoulder method using bellows carriers (30, 32) mounted on the receiving shaft (12) and on a displacement shaft (14).

4. Tyre-building machine (10) according to one of the preceding claims,
**characterized in that** the second tyre-building drum (38) is in the form of a flat drum with a variable outer circumference and is configured to be used in the production of a tyre carcass according to the flat-drum method.

5. Tyre-building machine (10) according to one of the preceding claims,
**characterized by** a displacement shaft (14) which extends coaxially with respect to the receiving shaft (12) and has a shaft coupling (16) for coupling the displacement shaft (14) to the receiving shaft (12), wherein the displacement shaft (14) is axially displaceable to the receiving shaft (12) for the purpose of changing the tyre-building drums (26, 28, 38).

6. Tyre-building machine (10) according to Claim 5,
**characterized in that** the flat drum has an adjustment mechanism by way of which the outer circumference of the flat drum is settable, wherein the adjustment mechanism is actuatable via an axial movement of the displacement shaft (14).

7. Method for operating a tyre-building machine (10), in particular a tyre-building machine (10) according to one of the preceding claims, comprising the steps of:
- producing a tyre carcass according to a first building method using a first tyre-building drum (26, 28) of the tyre-building machine (10), wherein the production of the tyre carcass using the first tyre-building drum (26, 28) is realized in the shoulder method, and
- dismounting the first tyre-building drum (26, 28) from a receiving shaft (12) of the tyre-building machine (10);
**characterized by** the steps of:
- mounting a second tyre-building drum (38) on the receiving shaft (12) of the tyre-building machine (10); and
- producing a tyre carcass according to a second building method using the second tyre-building drum (38) of the tyre-building machine (10), wherein the production of the tyre carcass using the second tyre-building drum (38) is realized in the flat-drum method.

8. Method according to Claim 7,
**characterized by** at least one of the following steps:
- axially displacing a displacement shaft (14) of the tyre-building machine (10) for the purpose of changing the tyre-building drums (26, 28, 38), wherein the displacement shaft (14) extends coaxially with respect to the receiving shaft (12) and has a shaft coupling (16) for coupling the displacement shaft (14) to the receiving shaft (12),
- actuating an adjustment mechanism of the second tyre-building drum (38), in the form of a flat drum, via an axial movement of the displacement shaft (14), wherein the outer circumference of the flat drum is settable by the actuation of the adjustment mechanism.

## Revendications

1. Machine de confection de pneus (10) destinée à être utilisée dans la première étape de confection d'un processus de confection de pneus en deux étapes, avec
- un arbre de réception (12) pour recevoir un tambour de confection de pneus (26, 28, 38),
- un premier tambour de confection de pneus (26, 28) adapté pour être utilisé dans la fabrication d'une carcasse de pneu selon un premier procédé de confection, la fabrication de la carcasse de pneu en utilisant le premier tambour de confection de pneus (26, 28) étant effectuée par un procédé à épaulement ; et
- un deuxième tambour de confection de pneus (38) adapté pour être utilisé dans la fabrication d'une carcasse de pneu selon un deuxième procédé de confection, la fabrication de la carcasse de pneu en utilisant le deuxième tambour de confection de pneus (38) étant effectuée par le procédé à tambour plat ;
**caractérisé en ce que** le premier tambour de confection de pneus (26, 28) et le deuxième tambour de confection de pneus (38) peuvent être montés individuellement sur l'arbre de réception (12) sans l'autre tambour de confection de pneus (26, 28, 38) respectif, de telle sorte que la machine de confection de pneus (10) peut être utilisée pour fabriquer une carcasse de pneu selon le premier procédé de confection et pour fabriquer une carcasse de pneu selon le deuxième procédé de confection.

2. Machine de confection de pneus (10) selon la revendication 1,
**caractérisé en ce que** le premier tambour de confection de pneus (26, 28) est réalisé sous forme de tambour d'expansion qui comprend des supports de soufflet et est adapté pour être utilisé dans la fabrication d'une carcasse de pneu selon le procédé à épaulement.

3. Machine de confection de pneus (10) selon la revendication 1,
**caractérisé en ce que** le premier tambour de confection de pneus (26, 28) est réalisé sous forme de tambour pliant et est adapté pour être utilisé en utilisant des supports de soufflet (30, 32) montés sur l'arbre de réception (12) et un arbre de translation (14) dans la fabrication d'une carcasse de pneu selon le procédé à épaulement.

4. Machine de confection de pneus (10) selon l'une quelconque des revendications précédentes,
**caractérisé en ce que** le deuxième tambour de confection de pneus (38) est réalisé sous forme de tambour plat ayant une circonférence extérieure variable et est adapté pour être utilisé dans la fabrication d'une carcasse de pneu selon le procédé à tambour plat.

5. Machine de confection de pneus (10) selon l'une quelconque des revendications précédentes,
**caractérisé par** un arbre de translation (14) qui s'étend coaxialement à l'arbre de réception (12) et présente un accouplement d'arbre (16) pour accoupler l'arbre de translation (14) à l'arbre de réception (12), l'arbre de translation (14) étant déplaçable axialement par rapport à l'arbre de réception (12) pour changer les tambours de confection de pneus (26, 28, 38).

6. Machine de confection de pneus (10) selon la revendication 5,
**caractérisée en ce que** le tambour plat présente un mécanisme de réglage avec lequel la circonférence extérieure du tambour plat peut être ajustée, le mécanisme de réglage pouvant être actionné par un mouvement axial de l'arbre de translation (14).

7. Procédé d'exploitation d'une machine de confection de pneus (10), notamment d'une machine de confection de pneus (10) selon l'une quelconque des revendications précédentes, avec les étapes suivantes :
- la fabrication d'une carcasse de pneu selon un premier procédé de confection en utilisant un premier tambour de confection de pneus (26, 28) de la machine de confection de pneus (10), la fabrication de la carcasse de pneu en utilisant le premier tambour de confection de pneus (26, 28) étant effectuée par un procédé à épaulement ; et
- le démontage du premier tambour de confection de pneus (26, 28) d'un arbre de réception (12) de la machine de confection de pneus (10) ;
**caractérisé par** les étapes suivantes :
- le montage d'un deuxième tambour de confection de pneus (38) sur l'arbre de réception (12) de la machine de confection de pneus (10) ; et
- la fabrication d'une carcasse de pneu selon un deuxième procédé de confection en utilisant le deuxième tambour de confection de pneus (38) de la machine de confection de pneus (10), la fabrication de la carcasse de pneu en utilisant le deuxième tambour de confection de pneus (38) s'effectuant par le procédé à tambour plat.

8. Procédé selon la revendication 7,
**caractérisé par** au moins une des étapes suivantes :
- le déplacement axial d'un arbre de translation (14) de la machine de confection de pneus (10) pour changer les tambours de confection de pneus (26, 28, 38), l'arbre de translation (14) s'étendant coaxialement à l'arbre de réception (12) et présentant un accouplement d'arbre (16) pour accoupler l'arbre de translation (14) à l'arbre de réception (12),
- l'actionnement d'un mécanisme de réglage du deuxième tambour de confection de pneus (38) réalisé sous forme de tambour plat par l'intermédiaire d'un mouvement axial de l'arbre de translation (14), l'actionnement du mécanisme de réglage permettant d'ajuster la circonférence extérieure du tambour plat.
